# EUROPEAN PATENT APPLICATION

(11) **EP 1 830 242 A2**
(43) Date of publication of application: **05.09.2007**
(21) Application number: 06256104.8
(22) Date of filing: 29.11.2006
(51) Int. Cl.: G06F 1/16

(54) **Electronic apparatus, wireless communication and storage medium reading out device housed in electronic apparatus**

(30) Priority: 01.03.2006 JP 2006054388
(71) Applicant: TEAC CORPORATION, Musashino-shi, Tokyo 180-8550 (JP)
(72) Inventor: Tuyuguchi, Hiroshi, Tokyo 167-0054 (JP); Inoue, Kazuhiko, Tokyo 198-0053 (JP); Matsuura, Norio Room 802, Tokorozawa-shi Saitama 359-1116 (JP)
(74) Representative: Rees, Alexander Ellison

(57) **Abstract**

A wireless unit 6 is mounted in a multi card reader device 1 housed in a housing portion of a storage medium reading out device which is provided in a main body case of a personal computer. According to this constitution, the prevention of miniaturization and weight saving of a main body case of an electronic apparatus can be canceled and it becomes possible to provide a storage medium reading out device housed in an electronic apparatus wherein there is provided with an electronic apparatus in which a wireless unit is mounted in a storage medium reading out device housed at a housing portion of the storage medium reading out device of a main body case of an electronic apparatus and which makes it possible to carry out a wireless communication with an external apparatus and there is provided with a wireless unit for carrying out a wireless communication between the electronic apparatus and an external apparatus.

## Description

### CROSS REFERENCES TO RELATED APPLICATIONS

The present invention contains subject manner related to Japanese Patent Application JP 2006-054388 filed in the Japanese Patent Office on March 1, 2006, the entire contents of which being incorporated herein by reference.

### BACKGROUND OF THE INVENTION

### Field of the Invention:

The present invention relates to an electronic apparatus provided with a wireless unit for carrying out a wireless communication with an external apparatus and in more detail relates to an electronic apparatus provided with a wireless unit in a storage medium reading out device housed in the electronic apparatus.

### Description of the Related Art:

In recent years, a wireless communication apparatus which is compliant, for example, with a communication standard of Bluetooth® or the like has been developed along with the progress of the wireless communication technology. Further, in a case when a wireless communication is carried out in a personal computer (hereinafter, referred to as PC) with respect to a wireless keyboard or a wireless mouse which is an external apparatus, there has been known a PC in which a wireless unit for transmitting and receiving a wireless signal is mounted on a rear face of a front panel of an unused drive housing portion in which a drive is not housed by utilizing a drive housing portion which houses various kinds of disc drives provided in the main body case of the PC (for example, Patent Document 1).
[Patent Document 1] Japanese unexamined patent publication No. 2001-290558

As described above, a wireless unit is to be mounted in an unused drive housing portion in a conventional PC mounted with a wireless unit, so that in a case when necessity occurs for housing further various kinds of disc drives additively, there is a problem that it cannot house them for the reason that the wireless unit is already mounted.

Also, in a conventional PC mounted with a wireless unit, although the wireless unit is miniaturized, an unused drive housing portion becomes an installation space of the wireless unit, so that the space is to be kept unnecessarily. Consequently, there was a problem in which miniaturization and weight saving of the main body case of the PC was prevented.

### SUMMARY OF THE INVENTION

The present invention was invented in view of the problem which is included in the aforesaid related art and has an object, in order to cancel the prevention of miniaturization and weight saving of a main body case of an electronic apparatus, to provide a storage medium reading out device housed in an electronic apparatus wherein there is provided with an electronic apparatus in which a wireless unit is mounted in a storage medium reading out device housed at a housing portion of the storage medium reading out device of a main body case of an electronic apparatus and which makes it possible to carry out a wireless communication with an external apparatus and there is provided with a wireless unit for carrying out a wireless communication between the electronic apparatus and an external apparatus.

In order to achieve aforesaid object, the present invention has a feature in an electronic apparatus such that a wireless unit for carrying out a wireless communication with an external apparatus is mounted in a storage medium reading out device which is housed in a housing portion of the storage medium reading out device.

In the electronic apparatus of the present invention, it is preferable that the housing portion of aforesaid storage medium reading out device is a housing portion of a 3.5 inch size storage medium reading out device.

Also, the present invention has a feature in a storage medium reading out device housed in an electronic apparatus such that a wireless unit for carrying out a wireless communication between aforesaid electronic apparatus and an external apparatus is mounted therein.

In the storage medium reading out device of the present invention, it is preferable that aforesaid storage medium reading out device is housed in a housing portion of a 3.5 inch size storage medium reading out device of aforesaid electronic apparatus.

According to the present invention, since a wireless unit is mounted in a storage medium reading out device which is housed in a housing portion of the storage medium reading out device of a main body case of an electronic apparatus, it is not necessary to keep a space for installing the wireless unit independently in the main body case of the electronic apparatus and it is possible to make the main body case of the electronic apparatus to be miniaturized and to be weight-reduced.

### BRIEF DESCRIPTION OF THE DRAWINGS

FIG. 1 is an exploded perspective view showing a storage medium reading out device according to an exemplified embodiment of the present invention; and
FIG. 2 is an appearance perspective view showing a personal computer which is an electronic apparatus according to an exemplified embodiment of the present invention.

### DESCRIPTION OF THE PREFERRED EMBODIMENTS

Hereinafter, it will be explained with respect to a storage medium reading out device housed in an electronic apparatus according to an exemplified embodiment of the present invention by using drawings.

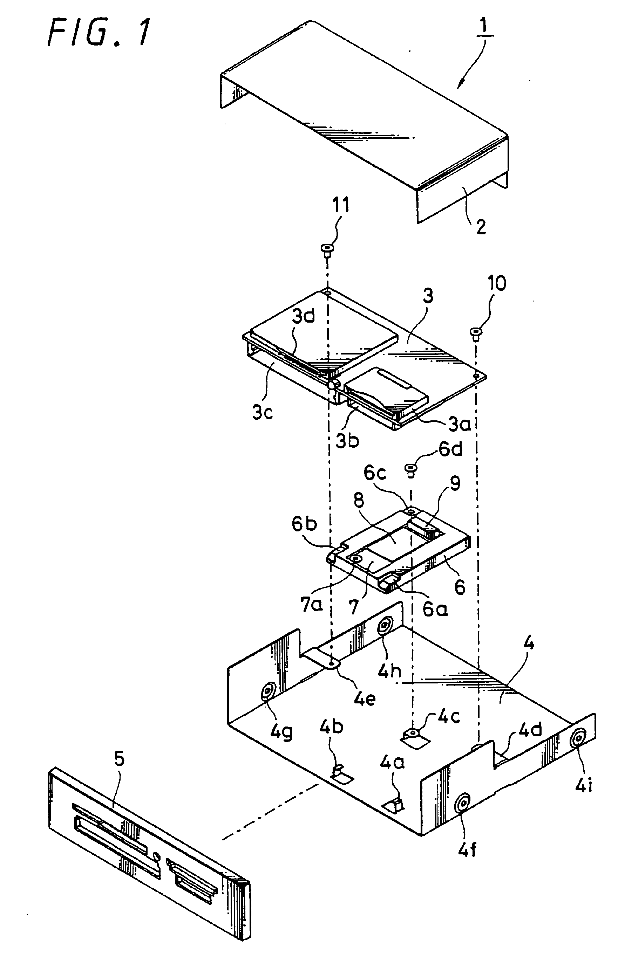

FIG. 1 is an exploded perspective view of a multi card reader device 1 which is a storage medium reading out device carrying out the present invention. The multi card reader device 1 corresponds to data reading-out of a plurality of storage media such as Smart Media, Compact Flash®, Memory Stick, SD card, Multimedia Card® and the like and includes a plurality of different sized card slots.

It should be noted that the multi card reader device 1 which is the storage medium reading out device is in a concept that includes a device provided with not only a reading out function but also a data writing-in function.

In the same drawing, 2 is an upper chassis of the multi card reader device 1, 3 is a circuit board having various kinds of slots 3a, 3b, 3c and 3d, 4 is a lower chassis, 5 is a front bezel, 6 is a wireless unit, 7 is a printed circuit board, 8 is a wireless module and 9 is a connector.

The wireless unit 6 is constituted such that the printed circuit board 7 mounted with the wireless module 8 and the connector 9 is screw-fixed by a screw 7a. It should be noted that another constitution is also possible in which the printed circuit board 7 is not screw-fixed but is fixed by adhesion or the like.

The wireless module 8 is mounted approximately at the center of the printed circuit board 7. The wireless module 8 is provided with an oscillator, an encoder, a decoder and the like, for transmitting and receiving a predetermined wireless signal, although they are not shown. It should be noted that the wireless module 8 is connected with an antenna although it is not shown either. It is allowed for the antenna to be a thin-type antenna arranged on the front face of the printed circuit board 7.

Also, the printed circuit board 7 is mounted with the connector 9 connected to the wireless module 8. The connector 9 is connected to the main board built-in in the main body case of the electronic apparatus by means of a predetermined cable which is not shown when the multi card reader device 1 is housed in the main body case of the electronic apparatus. It should be noted that a power supply is applied to the wireless unit 6 through a cable connected to the connector 9.

As shown in the same drawing, first, guiding concave portions 6a, 6b, 6c of the wireless unit 6 are engaged with engagement portions 4a, 4b and 4c provided on the lower chassis 4; the engagement portion 4c and the guiding concave portion 6c are screw-fixed by a screw 6d; and the wireless unit 6 is mounted on the lower chassis 4.

Next, the circuit board 3 is screw-fixed to mounting pieces 4d and 4e provided on the lower chassis 4 by means of screws 10 and 11 and the circuit board 3 is mounted on the lower chassis 4. Also, the upper chassis 2 is mounted so as to cover the circuit board 3 and a front bezel 5 is mounted at the front edges of upper chassis 2 and the lower chassis 4. This front bezel 5 is provided with openings into which storage media are to be inserted corresponding to the various kinds of slots 3a, 3b, 3c and 3d.

Then, the multi card reader device 1 constituted as described above is housed in the housing portion of the storage medium reading out device (drive housing portion) provided in the main body case of the electronic apparatus. In this case, mounting portions 4f, 4g, 4h and 4i provided on the lower chassis 4 and the housing portion of the storage medium reading out device of the main body case are screw-fixed and the multi card reader device 1 is fixed to the housing portion of the storage medium reading out device.

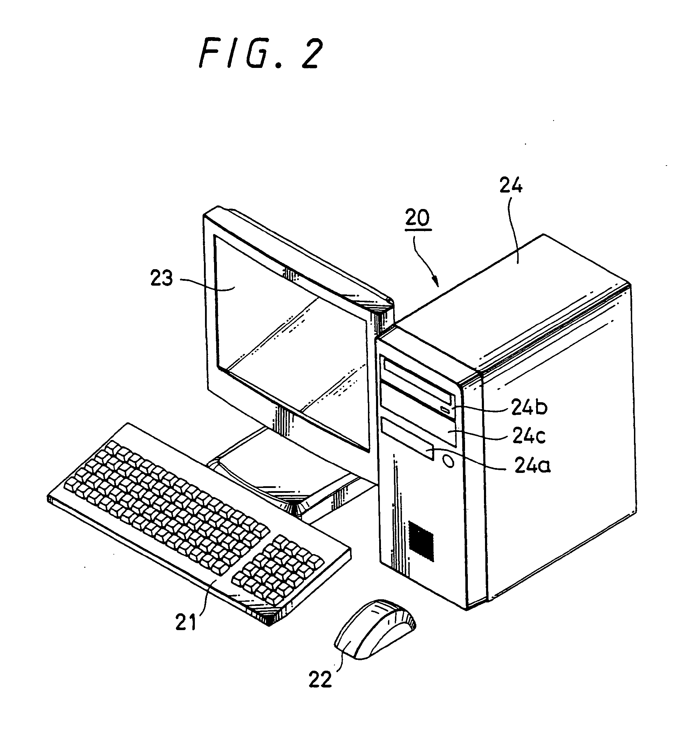

It should be noted that the electronic apparatus in which the multi card reader device 1 is housed is a PC and FIG. 2 is an appearance perspective view showing a constitution of a PC 20 in which the multi card reader device 1 is housed. In the same drawing, 21 is a wireless keyboard, 22 is a wireless mouse, 23 is a display, 24 is a main body case of the PC 20. Also, 24a, 24b and 24c are housing portions of storage medium reading out devices provided in the main body case 24.

As shown in the same drawing, the multi card reader device 1 is housed in the housing portion 24a of the storage medium reading out device provided in the main body case 24 of the PC 20. As described above, the connector 9 of the wireless unit 6 mounted in the housed multi card reader device 1 is connected to the main board built-in in the main body case 24 of the PC 20 by means of a predetermined cable.

In this structure, various kinds of processing operations which the PC 20 executes are performed in accordance with instruction inputs from the wireless keyboard 21 or the wireless mouse 22. In more detail, the instruction input from the wireless keyboard 21 or the wireless mouse 22 is transmitted as a wireless signal and when it is received by the wireless unit 6, the received content thereof is transmitted to the main board of the main body case 24 of the PC 20. Then, various kinds of processing operations of the PC 20 are executed in accordance with the received contents.

It should be noted that the wireless module 8 is a module for carrying out a wireless signal transmission and reception between the PC 20 and the wireless keyboard 21 or the wireless mouse 22, in which the communication system of the wireless signal is, for example, according to the Bluetooth standard. It is needless to say that another system can be applied thereto.

As described above, since the wireless unit 6 is mounted to the multi card reader device 1 housed in the housing portion 24a of the storage medium reading out device provided in the main body case 24 of the PC 20, it is possible to mount the wireless unit 6 without sacrificing the space for the unused housing portion 24c of the storage medium reading out device of the main body case 24 of the PC 20.

In this manner, even in a case when necessity for additively housing another storage medium reading out device in the main body case 24 of the PC 20 newly occurs, it becomes possible to house it in the unused housing portion 24c of the storage medium reading out device. It should be noted in FIG. 2 that it shows a state in which another storage medium reading out device such, for example, as an optical disc apparatus or the like is already housed also in housing portion 24b of the storage medium reading out device so as to be used.

Also, it is not necessary to keep a space for installing the wireless unit 6 in the main body case 24 of the PC 20 independently, so that it is possible to make the main body case 24 of the PC 20 to be miniaturized and to be weight reduced.

It should be noted that the multi card reader device 1 according to the present exemplified embodiment is a device housed in the housing portion 24a of a 3.5 inch size storage medium reading out device and therefore, to mount the wireless unit 6 in the multi card reader device 1 is effective for miniaturization of the main body case 24 of the PC 20 and weight saving thereof.

Further, in the multi card reader device 1, the upper chassis 2 is not mounted such that it completely covers the lower chassis 4, but such that the upper chassis 2 only covers the circuit board 3. A space is kept at the rear portion of the multi card reader device 1 and a gap is kept between the upper chassis 2 and the lower chassis 4. More specifically, an opening is formed at the rear portion of the multi card reader device 1.

Owing to this fact, it is possible to carry out also connecting the connector 9 of the wireless unit 6 and the main board built-in in the main body case 24 of the PC 20 by a cable easily. More specifically, it is possible to connect the connector 9 and the main board built-in in the main body case 24 of the PC 20 easily by a cable from the opening at the rear portion of the multi card reader device 1 which is a gap between the upper chassis 2 and the lower chassis 4.

Also, the wireless unit 6 is mounted at the front portion of the multi card reader device 1, in more detail, on the front edge side of the lower chassis 4 which is on the rear side of the front bezel 5, so that it is possible to carry out the reception of the wireless signal certainly. More specifically, when the multi card reader device 1 is housed in the main body case 24 of the PC 20, it is preferable in a case when wireless signals are transmitted by the wireless keyboard 21 or the wireless mouse 22 from the front face side of the front bezel 5 of the multi card reader device 1.

As mentioned above, it was explained with respect to exemplified embodiments of the present invention, but the present invention is not limited by the exemplified embodiments shown in the drawings and various kinds of modifications are possible based on the technical ideas of the present invention. For example, an example was shown for the wireless unit 6 to be mounted in the multi card reader device 1, but it is allowed to mount the wireless unit 6 on the outer side of the multi card reader device 1 such as on the upper face on the lower face, on the side face or the like of the multi card reader device 1 on a condition if the multi card reader device 1 can be miniaturized. In other words in short, if it is possible to house the wireless unit 6 in the housing portion 24a of storage medium reading out device of the PC 20 in a state in which the wireless unit 6 is mounted in the multi card reader device 1, it is possible to set the mounting position of the wireless unit 6 properly.

Having described preferred embodiments of the invention with reference to the accompanying drawings, it is to be understood that the invention is not limited to those precise embodiments and that various changes and modifications could be effected therein by one skilled in the art without departing from the spirit or scope of the invention as defined in the appended claims.

## Claims

1. An electronic apparatus, wherein a wireless unit for carrying out a wireless communication with an external apparatus is mounted in a storage medium reading out device which is housed in a housing portion of said storage medium reading out device.

2. The electronic apparatus according to claim 1, wherein the housing portion of said storage medium reading out device is a housing portion of a 3.5 inch size storage medium reading out device.

3. A storage medium reading out device housed in an electronic apparatus, wherein a wireless unit which carries out a wireless communication between said electronic apparatus and an external apparatus is mounted therein.

4. A storage medium reading out device according to claim 3, wherein said storage medium reading out device is housed in a housing portion of a3.5 inch size storage medium reading out device of said electronic apparatus.
